# EUROPÄISCHE PATENTSCHRIFT

(11) **EP 2 930 013 B1**
(45) Veröffentlichungstag und Bekanntmachung des Hinweises auf die Patenterteilung: **26.01.2022**
(21) Anmeldenummer: 15162314.7
(22) Anmeldetag: 02.04.2015
(51) Int. Cl.: B29D 11/00, G02C 11/02, G02C 7/02, A44C 17/04

(54) **VERFAHREN ZUR HERSTELLUNG EINES BRILLENGLASES MIT EINEM SCHMUCKELEMENT**
METHOD OF PRODUCING A SPECTACLE LENS HAVING A JEWELLERY ELEMENT
DISPOSITIF DE PRODUCTION D'UN VERRE DE LUNETTES POURVU D'UN ÉLÉMENT DE JOAILLERIE

(30) Priorität: 11.04.2014 CH 5652014
(43) Veröffentlichungstag der Anmeldung: 14.10.2015
(73) Patentinhaber: Metamaterial Inc., Dartmouth NS B2Y 4M9 (CA)
(72) Erfinder: Pfeffer, Frank, 6340 Baar (CH); Weiteneder, Christophe, 6005 Luzern (CH)
(74) Vertreter: Kilburn & Strode LLP

(56) Entgegenhaltungen:
- EP-A1- 1 811 330
- DE-A1- 1 729 087
- GB-A- 465 702
- US-A1- 2009 091 825
- US-B1- 6 177 032

## Beschreibung

### Technisches Gebiet

Die Erfindung betrifft ein Verfahren zum Herstellen eines Brillenglases mit einem Schmuckelement.

### Hintergrund der Erfindung

Es ist bekannt, beispielsweise Diamanten oder andere Schmuckstücke im Bereich des Randes auf den Gläsern einer Brille anzuordnen. Diese Diamanten und Schmuckstücke sind natürlich sehr klein. Aus EP 1811330 ist ein Brillenglas bekannt, das ausgebildet ist, ein verzierendes Zubehörteil aufzunehmen. DE 1 729 087 A1 offenbart ein Verfahren zur Herstellung von mehrteiligen Schutzlinsen oder Okularen aus organischen Materialien, die dekorative Elemente oder Schmuckstücke enthalten.

### Kurze Beschreibung der Erfindung

Die Erfindung betrifft ein Verfahren zum Herstellen eines Brillenglases mit wenigstens einem Schmuckelement, wobei das wenigstens eine Schmuckelement in das Brillenglas eingegossen wird. Solche Schmuckelemente sind beispielsweise Diamanten, Kristalle, Juwelen, Edelsteine und Metallstücke.

### Beschreibung der Figuren

Die Figuren illustrieren ein Ausführungsbeispiel der Erfindung. Die Figuren sind schematisch und nicht massstäblich gezeichnet.

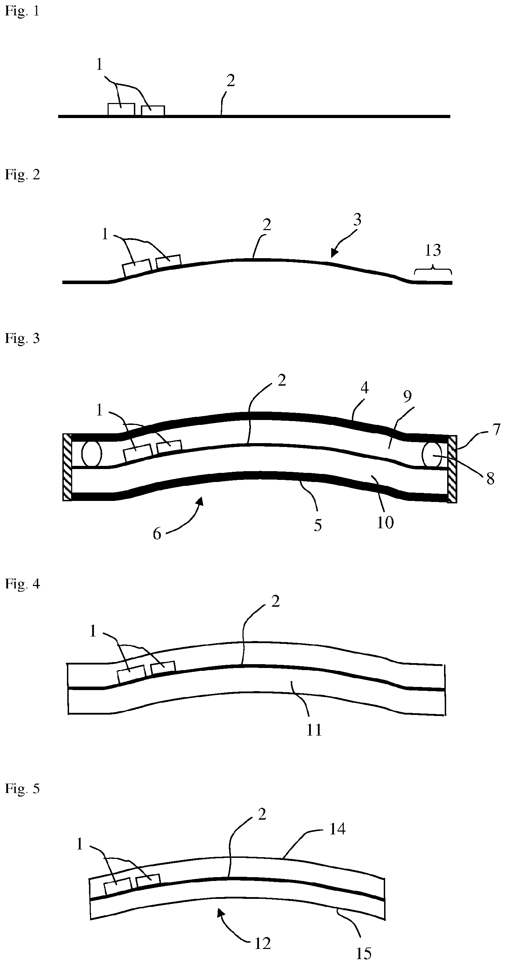

Die Fig. 1 bis 5 zeigen verschiedene Momentaufnahmen während des erfindungsgemässen Herstellungsverfahrens.

### Detaillierte Beschreibung der Erfindung

Das erfindungsgemässe Verfahren zum Herstellen eines Brillenglases mit wenigstens einem Schmuckelement wird nachfolgend anhand der Figuren im Detail erläutert. Die Fig. 1 zeigt eine Momentaufnahme nach dem Schritt A, die Fig. 2 zeigt eine Momentaufnahme nach dem Schritt B, die Fig. 3 zeigt eine Momentaufnahme nach dem Schritt D, die Fig. 4 zeigt eine Momentaufnahme nach dem Schritt G und die Fig. 5 zeigt eine Momentaufnahme nach dem Schritt H.

Das erfindungsgemässe Verfahren umfasst die folgenden Schritte:
A) ein oder mehrere Schmuckelemente 1 an einer oder mehreren vorbestimmten Stellen auf ein planares Folienstück 2 aufbringen, dann
B) das Folienstück 2 derart dauerhaft verformen, dass zumindest ein Bereich des Folienstücks 2 eine gekrümmte Fläche 3 ist, dann
C) fakultativ, das verformte Folienstück 2 aktivieren, dann
D) das verformte Folienstück 2 zwischen einer vorderen Formschale 4 und einer hinteren Formschale 5 platzieren und mit den beiden Formschalen 4 und 5 zu einem Verbund 6 verbinden, um eine Moldkavität mit einer Eingiessöffnung zu bilden, wobei das verformte Folienstück 2 von der vorderen Formschale 4 und von der hinteren Formschale 5 beabstandet ist, dann
E) ein Monomer in die Moldkavität giessen, dann
F) das Monomer zu einem Monomerblock 11 aushärten, dann
G) den Verbund 6 zerlegen und dabei die beiden Formschalen 4 und 5 von dem Monomerblock 11 abtrennen, und dann
H) das Brillenglas 12 aus dem Monomerblock 11 herausschneiden.

Das Brillenglas 12 wird durch Giessen hergestellt. Dabei definieren die beiden Formschalen die optischen Flächen 14 und 15 des Brillenglases 12. Das wenigstens eine Schmuckelement 1 wird dabei im Inneren mit eingegossen.

Das Folienstück 2 wird aus einer planaren Folie, deren Dicke typischerweise etwa 0.3 mm beträgt, aber auch von etwa 0.03 mm bis zu 1.2 mm reichen kann, ausgestanzt oder ausgeschnitten, so dass es nach der Verformung zwischen die beiden Formschalen 4 und 5 passt. Die Form des planaren Folienstücks 2 nach diesem Schritt ist typischerweise rund oder elliptisch.

Die Schmuckelemente 1 werden vorzugsweise durch Aufkleben auf das Folienstück 2 aufgebracht. Die Schmuckelemente 1 können aber auch mit anderen Methoden an dem Folienstück 2 befestigt werden, beispielsweise durch Anschmelzen und/oder mittels Ultraschall, etc.

Die Verformung des Folienstücks 2 erfolgt vorzugsweise so, dass ein Randstreifen 13 des Folienstücks 2 planar bleibt. Die gekrümmte Fläche 3 des Folienstücks 2 kann eine Kugelfläche oder eine elliptische oder eine torische Fläche oder eine beliebige andere, der Anwendung angepasste Fläche sein. Die Verformung des Folienstücks 2 ist eine dauerhafte Verformung.

Die Aktivierung des Folienstücks 2 ist eine chemische Behandlung, insbesondere eine Plasmabehandlung, die dafür sorgt, dass die Oberflächen des Folienstücks 2 von dem Monomer gut benetzbar sind und dass das ausgehärtete Monomer dauerhaft ohne Gefahr des Ablösens an dem Folienstück 2 haftet. Die Aktivierung bringt bei vielen Folien eine Verbesserung der Benetzbarkeit und der Haftung. Es können aber auch Folien verwendet werden, auf deren Oberfläche ein sogenannter Primer aufgebracht ist, der als Haftvermittler wirkt. Durch diese Beschichtung der Folie kann es ebenfalls zu einer guten Benetzung und Haftung kommen, ohne dass die Oberfläche aktiviert werden muss. Bei einigen Folien sind die Benetzbarkeit und die Haftung ohne Aktivierung und/oder ohne Primer ausreichend. In diesem Fall kann auf die Aktivierung bzw. den Primer verzichtet werden.

Die Verbindung des Folienstücks 2 mit den beiden Formschalen 4 und 5 erfolgt vorzugsweise, indem das Folienstück 2 an der vorderen oder der hinteren Formschale 4 bzw. 5 befestigt wird. Im Beispiel wurde das Folienstück 2 mit Klebstoff 8 an der vorderen Formschale 4 befestigt. Wenn der Randstreifen 13 des Folienstücks 2 und der Formschalen 4 und 5 planar ist, dann wird der Randstreifen 13 des Folienstücks 2 in einem vorbestimmten Abstand an einer der beiden Formschalen 4 oder 5 befestigt, vorzugsweise durch Kleben, und dann der Verbund 6 gebildet, beispielsweise mittels eines Tapes 7 gemäss dem in der WO 2006/003099 beschriebenen Verfahren, oder auf andere Weise, beispielsweise mittels eines Dichtungsrings. Das Folienstück 2 befindet sich zwischen den beiden Formschalen 4 und 5 und ist sowohl von der vorderen Formschale 4 wie auch von der hinteren Formschale 5 durch je einen Hohlraum 9 bzw. 10 getrennt. Diese beiden Hohlräume 9 und 10 bilden die Moldkavität.

Nach dem Aushärten des Monomers wird der Verbund 6 wieder zerteilt: Im Schritt G werden zunächst das Tape 7 bzw. der Dichtungsring und danach die beiden Formschalen 4 und 5 von dem Monomerblock 11 abgetrennt. Der Monomerblock 11 stellt nun das fast fertige Brillenglas 12 dar, seine Vorderseite 14 und seine Rückseite 15 bilden die optischen Flächen des Brillenglases 12.

Das Herausschneiden des Brillenglases 12 aus dem Monomerblock 11 betrifft nur den Umfang des Brillenglases 12, nicht aber seine optischen Flächen, da es nur noch darum geht, das Brillenglas an das Brillengestell anzupassen. Das Herausschneiden kann bei dem Hersteller der Brillen wie auch in einem Optikfachgeschäft erfolgen.

Die Folien, aus denen die Folienstücke 2 ausgestanzt werden, sind transparent und von hoher optischer Qualität. Sie sind farblos für die Verwendung in normalen Brillen oder farbig für die Verwendung in Sonnenbrillen. Die Folien können auch einen definierten Farbverlauf haben. Die Farben bewirken die Tönung des Brillenglases. Solche Folien sind meistens einlagig. Die Folien können auch polarisierende Folien sein. Polarisierende Folien sind meistens mehrlagig. Die Folien sind beidseitig mit einer Schutzfolie bedeckt, die während des Herstellungsprozesses der Brillengläser entfernt werden, die eine Schutzfolie vor dem Aufbringen der Schmuckelemente, die andere Schutzfolie spätestens vor dem Verformen des Folienstücks.

Damit sich die Schmuckstücke auf der Brille, in der die Brillengläser 12 eingesetzt werden, am richtigen Ort befinden, müssen verschiedene Daten bereits bei der Montage der Schmuckstücke auf dem Folienstück 2 bekannt sein, unter anderem Daten über die Form und Grösse des Brillengestells, Daten über die optischen Eigenschaften des Brillenglases, etc. Bei polarisierten Folien muss zudem die Polarisationsrichtung berücksichtigt werden, damit die Polarisationsrichtung der Brillengläser 12 bei den fertig montierten Billen in einer definierten Richtung verläuft.

Die Brillengläser 12 können auch ohne optische Wirkung sein.

Wie dem beschriebenen Verfahren zu entnehmen ist, bedeutet der Begriff "Brillenglas" nicht, dass das Brillenglas tatsächlich aus Glas besteht. Vielmehr besteht das Brillenglas aus ausgehärtetem Monomer, d.h. aus Kunststoff.

Die Erfindung hat mehrere Vorteile:
- Die Schmuckelemente befinden sich im Inneren des Brillenglases und sind somit vor Beschädigung oder Verlust geschützt.
- Die Schmuckelemente befinden sich auf der der Vorderseite der Brillengläser zugewandten Seite der Folie. Sie befinden sich damit bei Sonnenbrillen vor der durch das Folienstück bewirkten Tönung, während sie bei herkömmlichen Sonnenbrillen hinter der Tönung sind. Sie behalten damit ihre eigene Farbe und ihre volle Leuchtkraft.
- Die Oberfläche des Brillenglases ist stufenlos und überall homogen geschlossen, d.h. sie ist wie eine polierte Oberfläche. Somit können die Brillengläser wie bei Brillen mit herkömmlichen Gläsern sehr bequem gereinigt werden, im Gegensatz zu Brillengläsern mit an der Oberfläche aufgebrachten Schmuckelementen.
- Die beiden Oberflächen des Brillenglases, die seine optischen Flächen bilden, müssen nicht geschliffen werden.

## Patentansprüche

1. Verfahren zum Herstellen eines Brillenglases (12) mit wenigstens einem Schmuckelement (1), umfassend die Schritte:
ein oder mehrere Schmuckelemente (1) an einer oder mehreren vorbestimmten Stellen auf ein planares Folienstück (2) aufbringen, dann
das Folienstück (2) derart dauerhaft verformen, dass zumindest ein Bereich des Folienstücks (2) eine gekrümmte Fläche (3) ist, dann
das verformte Folienstück (2) zwischen einer vorderen Formschale (4) und einer hinteren Formschale (5) platzieren und mit den beiden Formschalen (4, 5) zu einem Verbund (6) verbinden, um eine Moldkavität mit einer Eingiessöffnung zu bilden, wobei das verformte Folienstück (2) und das wenigstens eine Schmuckelement (1) von der vorderen Formschale (4) und von der hinteren Formschale (5) beabstandet sind, dann
ein Monomer in die Moldkavität giessen, dann
das Monomer zu einem Kunststoffblock (11) aushärten, dann
den Verbund (6) zerlegen und dabei die beiden Formschalen (4, 5) von dem Kunststoffblock (11) ablösen, und dann
das Brillenglas (12) aus dem Kunststoffblock (11) herausschneiden.

2. Verfahren nach Anspruch 1, wobei das Folienstück (2) derart verformt wird, dass ein Randstreifen (13) des Folienstücks (2) planar bleibt.

3. Verfahren nach Anspruch 1 oder 2, wobei das Folienstück (2) durch eine chemische Behandlung aktiviert wird.

4. Brillenglas (12) mit wenigstens einem Schmuckelement (1), **dadurch gekennzeichnet, dass** das wenigstens eine Schmuckelement (1) auf einem Folienstück (2) befestigt ist und sich vollständig in dem Inneren des Brillenglases (12) befindet, so dass das wenigstens eine Schmuckelement (1) von der Vorderseite (14) und der Hinterseite (15) des Brillenglases (12) durch eine ausgehärtete Monomerschicht, d.h. Kunststoffschicht, getrennt ist.

5. Brillenglas (12) nach Anspruch 4, **dadurch gekennzeichnet, dass** das Brillenglas (12) eine Tönung aufweist und dass sich das wenigstens eine Schmuckelement (1) vor der Tönung befindet.

6. Brillenglas (12) nach Anspruch 4 oder 5, **dadurch gekennzeichnet, dass** wenigstens ein Schmuckelement (1) ein Diamant, ein Kristall oder ein Juwel ist.

## Claims

1. Method of producing a spectacle lens (12) with at least one decorative element (1), comprising the following steps:
applying one or more decorative elements (1) to a planar piece of foil (2) at one or more predetermined positions, then
permanently deforming the piece of foil (2) in such a way that at least one region of the piece of foil (2) is a curved surface (3), then
positioning the deformed piece of foil (2) between a front mould shell (4) and a rear mould shell (5) and connecting it to the two mould shells (4, 5) to create a composite (6) in order to form a mould cavity with a pouring-in opening, wherein the deformed piece of foil (2) and the at least one decorative element (1) are kept at a distance from the front mould shell (4) and the rear mould shell (5), then
pouring a monomer into the mould cavity, then curing the monomer to create a block of plastic (11), then
breaking up the composite (6), and thereby detaching the two mould shells (4, 5) from the block of plastic (11), and then
cutting out the spectacle lens (12) from the block of plastic (11).

2. Method according to Claim 1, wherein the piece of foil (2) is deformed in such a way that a boundary strip (13) of the piece of foil (2) remains planar.

3. Method according to Claim 1 or 2, wherein the piece of foil (2) is activated by a chemical treatment.

4. Spectacle lens (12) with at least one decorative element (1), **characterized in that** the at least one decorative element (1) is fastened on a piece of foil (2) and is located completely in the interior of the spectacle lens (12), so that the at least one decorative element (1) is separated from the front side (14) and the rear side (15) of the spectacle lens (12) by a cured monomer layer, i.e. layer of plastic.

5. Spectacle lens (12) according to Claim 4, **characterized in that** the spectacle lens (12) has a tinting and **in that** the at least one decorative element (1) is located in front of the tinting.

6. Spectacle lens (12) according to Claim 4 or 5, **characterized in that** at least one decorative element (1) is a diamond, a crystal or a jewel.

## Revendications

1. Procédé pour la préparation d'un verre de lunettes (12) comportant au moins un élément ornemental (1), comprenant les étapes de :
application d'un ou plusieurs éléments ornementaux (1) au niveau d'un ou de plusieurs emplacements prédéterminés sur une feuille plane (2), puis
déformation de manière durable de la feuille (2) de telle manière qu'au moins une zone de la feuille (2) soit une surface courbe (3), puis
placement de la feuille (2) déformée entre une coque moulée (4) avant et une coque moulée (5) arrière et liaison avec les deux coques moulées (4, 5) pour donner un composite (6), afin de former une cavité de moule dotée d'une ouverture d'alimentation, la feuille déformée (2) et l'au moins un élément ornemental (1) étant à distance de la coque moulée (4) avant et de la coque moulée (5) arrière, puis
coulée d'un monomère dans la cavité de moule, puis durcissement du monomère en un bloc de matière plastique (11), puis
décomposition du composite (6) et ainsi détachement des deux coques moulées (4, 5) du bloc de matière plastique (11), et puis
découpe du verre de lunettes (12) à partir du bloc de matière plastique (11).

2. Procédé selon la revendication 1, la feuille (2) étant déformée de telle manière qu'une bande de bordure (13) de la feuille (2) reste plane.

3. Procédé selon la revendication 1 ou 2, la feuille (2) étant activée par le biais d'un traitement chimique.

4. Verre de lunettes (12) comportant au moins un élément ornemental (1), **caractérisé en ce que** l'au moins un élément ornemental (1) est fixé sur une feuille (2) et se trouve complètement à l'intérieur du verre de lunettes (12), de sorte que l'au moins un élément ornemental (1) est séparé de la partie avant (14) et de la partie arrière (15) du verre de lunettes (12) par le biais d'une couche de monomères durcie, c'est-à-dire une couche de matière plastique.

5. Verre de lunettes (12) selon la revendication 4, **caractérisé en ce que** le verre de lunettes (12) présente une teinte et **en ce que** l'au moins un élément ornemental (1) se trouve devant la teinte.

6. Verre de lunettes (12) selon la revendication 4 ou 5, **caractérisé en ce qu'**au moins un élément ornemental (1) est un diamant, un cristal ou un bijou.
